(19) Europäisches Patentamt
European Patent Office
Office européen des brevets

(11) Publication number: 0 135 391 A2

(12) EUROPEAN PATENT APPLICATION

(21) Application number: 84306284.5

(22) Date of filing: 14.09.84

(51) Int. Cl.[4]: G 06 K 11/00

(30) Priority: 16.09.83 US 533384

(43) Date of publication of application: 27.03.85 Bulletin 85/13

(84) Designated Contracting States: DE FR GB

(71) Applicant: Hewlett-Packard Company
Mail Stop 20 B-O 3000 Hanover Street
Palo Alto California 94304(US)

(72) Inventor: Kilbourn, Thomas Earl
183 N. Frances Street
Sunnyvale California 94080(US)

(72) Inventor: McClelland, Scott Robert
3366 Kathy Way
Loomis California 95650(US)

(74) Representative: Oliver, Peter Anthony
Hewlett-Packard Limited Nine Mile Ride Easthampstead
Wokingham, Berkshire RG11 3LL(GB)

(54) **Infrared touchscreens.**

(57) A circuit for controlling and detecting infrared light beams arrayed in front of a visual display to form a "touchscreen" is provided. Infrared light emitting diodes (2001) arrayed in front of the visual display are sequentially selected for a selection period and activated for a pulse period. Each infrared diode has associated with it a light sensitive phototransistor (2002) which is also selected for the selection period. If there is no obstruction between the selected infrared diode and its associated phototransistor, a signal is generated by the phototransistor and processed by the circuit, and a flip-flop is set. If there is an obstruction, no signal is generated, and the flip-flop is reset.

EP 0 135 391 A2

./...

Croydon Printing Company Ltd

FIG 1D

# INFRARED TOUCHSCREENS

The present invention relates to infrared touchscreens.

The present invention relates particularly to circuitry for controlling and detecting infrared light beams arrayed in front of a visual display to form a "touchscreen" which is actuated by a user touching the display in a desired area. The use of infrared light beams in touchscreens is disclosed in, for example, U.S. Patent Specifications Nos. 3,764,813, 3,775,560, and 3,860,754. However, various difficulties, for example in collimation of the light beams, have made widespread commercial manufacture of touchscreens costly and unattractive, due to the use of complicated means for collimating the infrared light beams and the use of complicated logic circuits to trigger and detect the interruption of infrared light beams.

The present invention provides a circuit for interfacing between a touchscreen device and a controlling device, the circuit being characterized by clocking means coupled to the touchscreen device and the controlling device for sending a clock pulse to the touchscreen device, synchronization means coupled to the touchscreen device and the controlling device for synchronizing the touchscreen device with the controlling device, and data means coupled to the touchscreen device and the controlling device for transferring data therebetween.

In a circuit as set forth in the last preceding paragraph, it is preferred that the touchscreen device employs a plurality of photo emitters and a plurality of photo detectors arranged in a matrix array so that each photo emitter has an associated photo detector and an output of each photo detector varies when an object is placed between each photo detector and its associated photo emitter.

In a circuit as set forth in the last preceding paragraph, it is preferred that for each clock pulse sent to the touchscreen device a datum is transferred indicating whether there is an obstruction placed between a first of the plurality of photo emitters and a first associated photo detector and in that successive clock pulses result in data transferred which describes whether an obstruction is placed between subsequent associated photo detectors.

The clocking means may be asynchronous.

For every clock pulse, the datum may be held by the data means until a subsequent clock pulse is generated.

The present invention also provides apparatus for generating photo beams in a sensor matrix device, the apparatus being characterized by a plurality of photo emitters, selection means coupled to the photo emitters for selecting one of the plurality of photo emitters for a selection period, and pulse means coupled to the selecting means for activating the one of the plurality of photo emitters for an activating period.

In apparatus as set forth in the last preceding paragraph, it is preferred that the activating period occurs during the selection period and the duration of the activating period is shorter than the duration of the selection period.

In apparatus as set forth in either one of the last two immediately preceding paragraphs, it is preferred that the photo beams are infrared light beams and the photo emitters emit infrared light.

The present invention further provides an apparatus for detecting one of a plurality of photo beams and comprising a plurality of photo detectors, the apparatus being characterized by selection means coupled to the photodetectors for selecting an output of one of the photo detectors, removing means coupled to the selecting means for removing signals not generated by the photo beams.

The photodetectors may include phototransistors. The selection means preferably comprises a plurality of analog switches.

The removing means preferably comprises a high pass filter.

Apparatus as set forth in any one of the last three immediately preceding paragraphs may further comprise conversion means coupled to the removing means for converting signals from the removing means into digital signals.

The photodetectors are preferably active even when not selected by the selection means.

In accordance with a preferred embodiment of the present invention there is provided a touchscreen circuit for triggering and detecting infrared light beams on a touchscreen. For a selection time period, determined by an asynchronous external clock pulse, the touchscreen circuit selects an infrared light emitting diode in an infrared light emitting diode array and an associated light sensitive phototransistor in a light sensitive phototransistor array. The selected light emitting diode and selected phototransistor are aligned so that when the selected diode is activated a beam of light travels along a path from the selected diode to the selected transistor.

Within the selection time period, the additional circuitry produces an activation pulse which activates the selected light emitting diode, resulting in the generation of a pulse of infrared light. If the path between the diode and the phototransistor is unobstructed, the phototransistor generates an ac current for a period of time essentially equivalent to the activation pulse. The touchscreen circuit detects the ac current produced by the phototransistors, screening out current resulting from ambient light. This is accomplished by coupling the ac current through a series of high pass and low pass filters, and then performing a Boolean "AND" on the output of the filters together with the activation pulse. The result is that a logic "1" is produced and stored in a flip-flop until the asynchronous external clock generates another clock pulse.

If the path between the diode and the phototransistor is obstructed, no ac current is generated, and a logic "0" is produced and stored in the flip-flop.

During successive selection periods, different diodes and their associated phototransistors are selected, until each diode in the diode array and each associated phototransistor in the phototransistor array have been selected once, thus completing one cycle. The occurrence of each "1" and "0" can then be analyzed to determine the position of one or more obstructions across the entire visual display.

There now follows a detailed description which is to be read with reference to the accompanying drawings of a circuit and apparatus according to the present invention; it is to be clearly understood that the circuit and apparatus have been selected for description to illustrate the invention by way of example and not by way of limitation.

In the accompanying drawings:-

Figures 1A - 1D provide a schematic circuit diagram of a preferred embodiment of the present invention.

Figure 1E is a map of Figures 1A - 1D.

Figure 2 is a diagram showing relative positions of infrared diodes and light sensitive phototransistors for use with the circuitry shown in Figure 1.

Figure 3 is a series of timing diagrams.

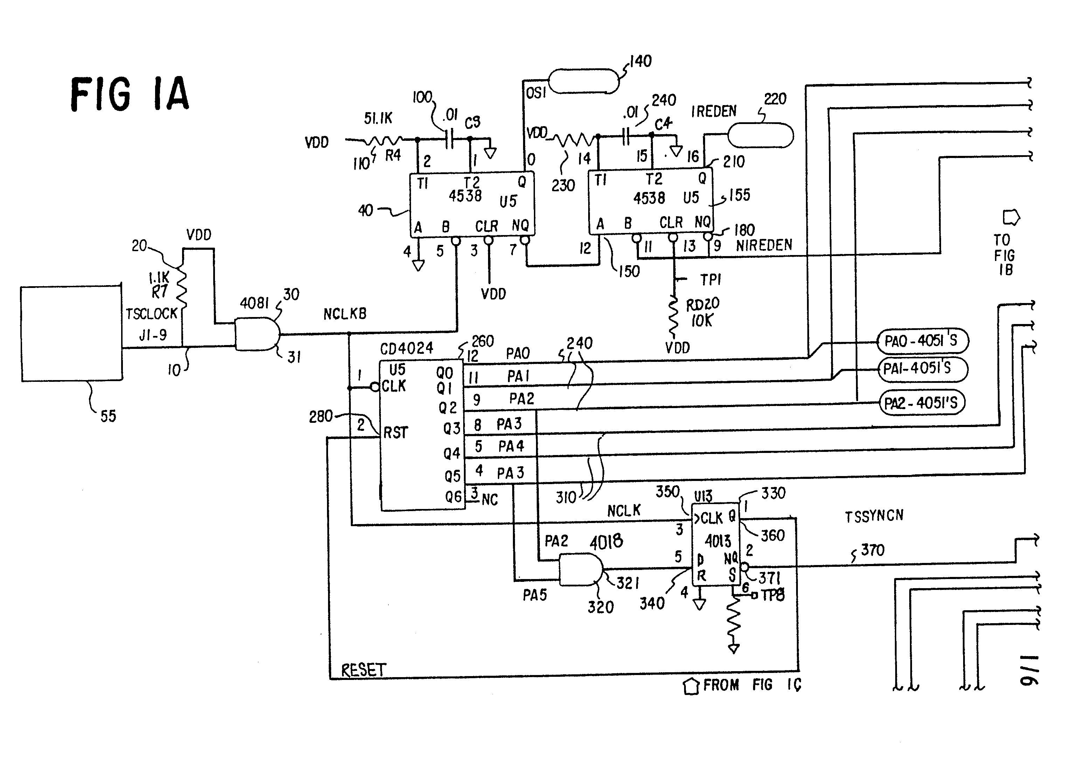

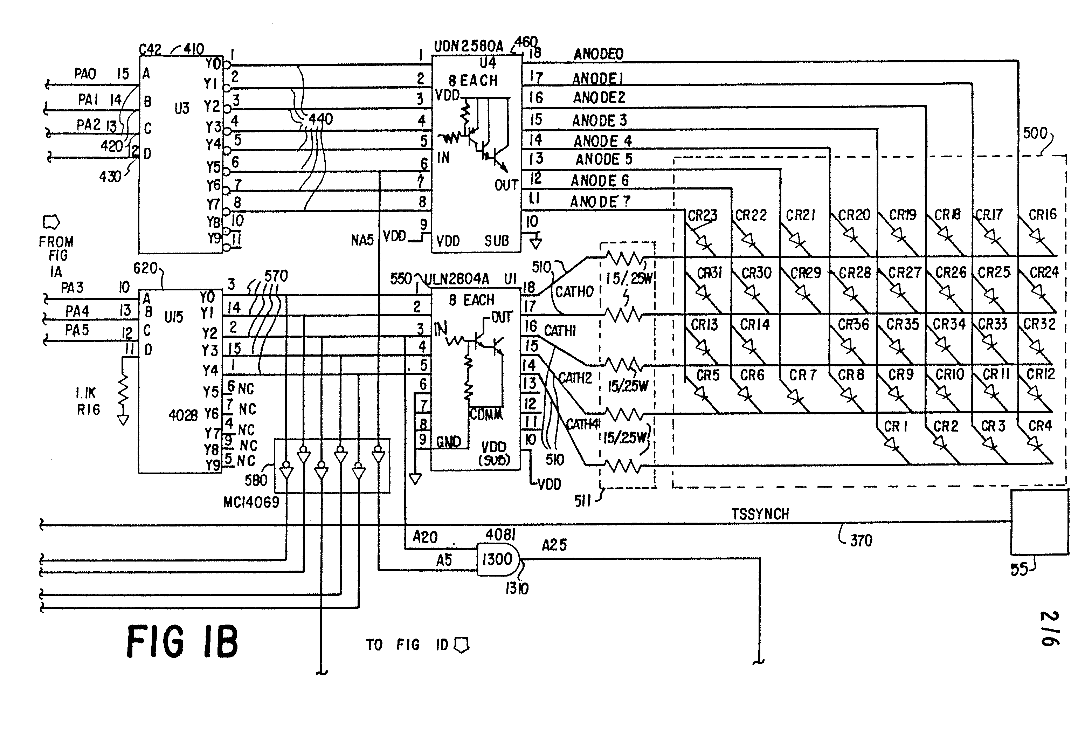

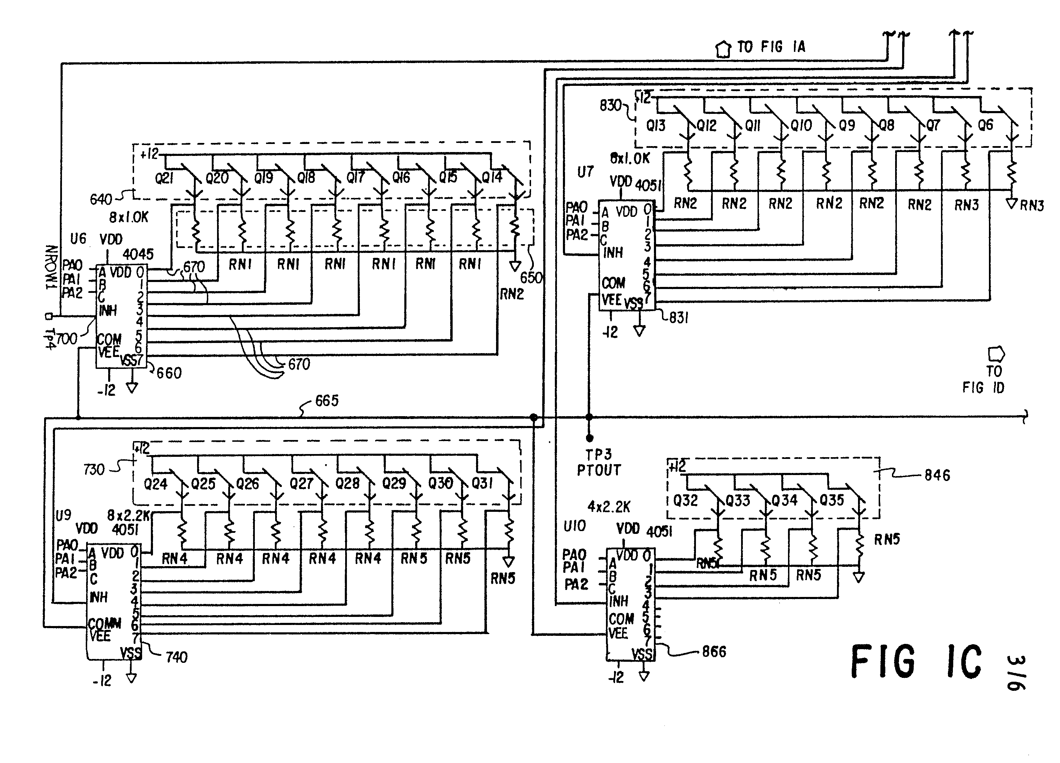

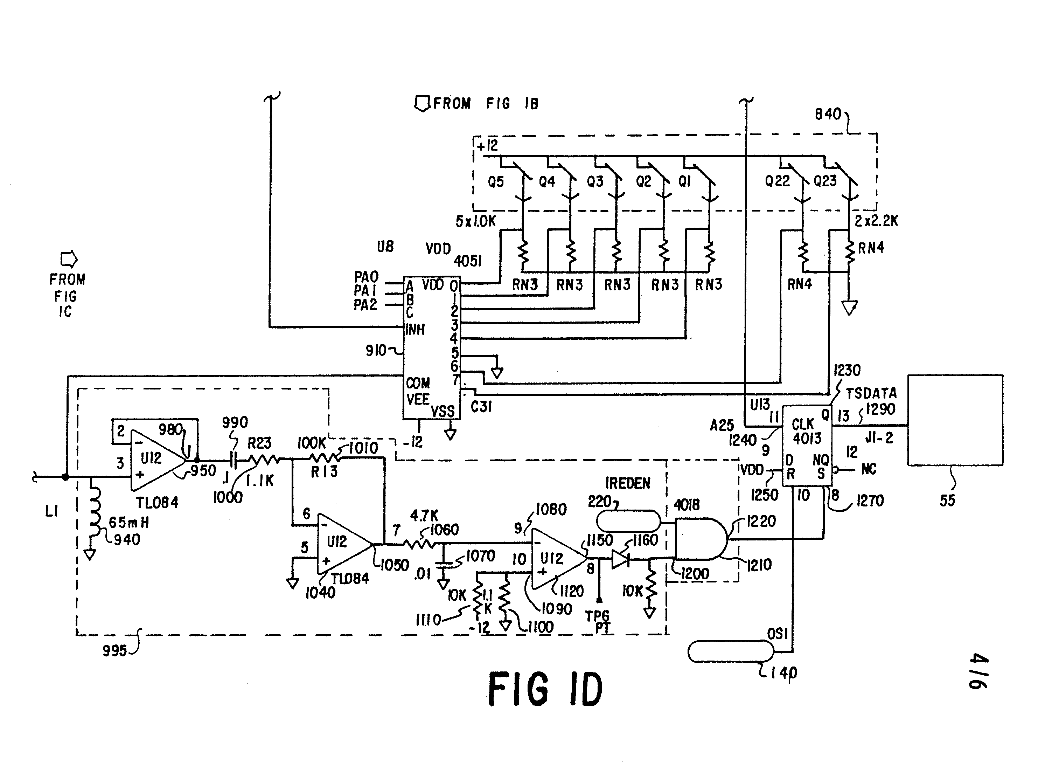

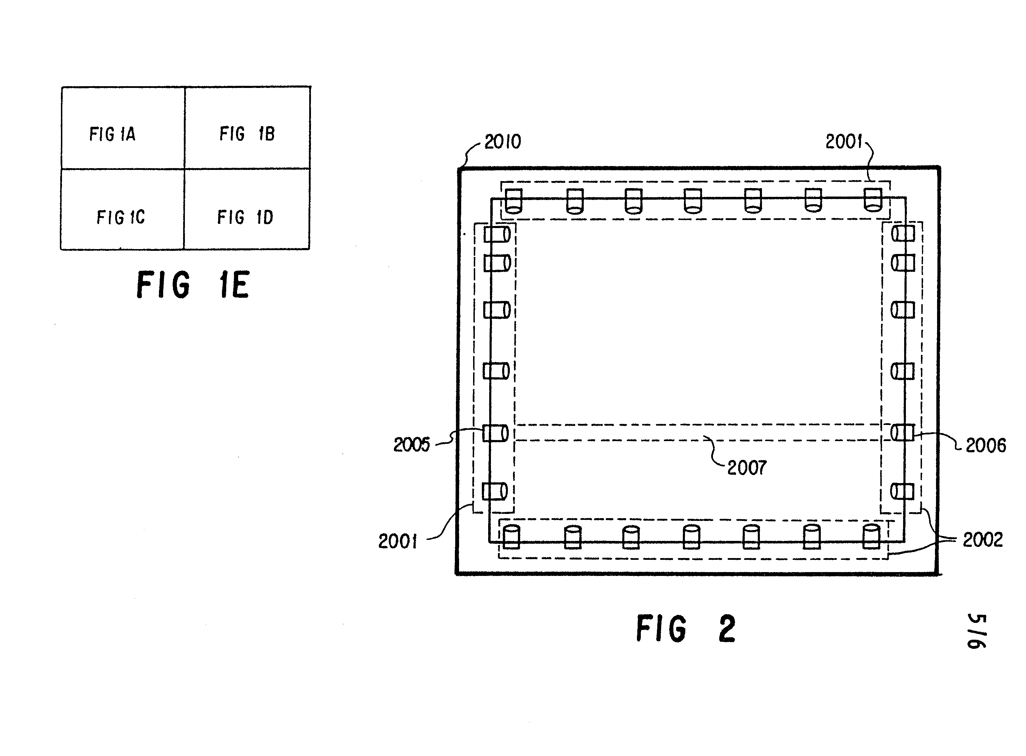

In Figure 1 a touchscreen circuit is shown for triggering and detecting infrared light beams on a touchscreen. The touchscreen circuit interfaces with a controlling circuit 55 by three interface wires: a clock wire 10, shown in Figure 1A, a data wire 1290, shown in Figure 1D, and a synchronization wire 370 shown in Figure 1B. The controlling circuit 55 operates a control cycle consisting of 36 selection periods, referred to as *0 to *35, followed by a reset period. During all but one of the 36 selection periods, one infrared light emitting diode CR1 to CR14 and CR16 to CR36, in a diode array 500, shown in Figure 1B, is selected along with an associated light sensitive phototransistor, Q1 to Q35, from a phototransistor array 640, a phototransistor array 730, a phototransistor array 830, a phototransistor array 840, or a phototransistor array 846, shown in Figures 1C and 1D, so that there exists an active photon path between each diode and its associated phototransistor.

The diodes CR1 to CR14 and CR16 to CR36 are commonly available infrared LEDs such as OP140SLA manufactured by TRW Corporation of Carrollton, Texas. The phototransistors Q1 to Q35 are also commercially available infrared phototransistors such as OP550SLA manufactured by TRW Corporation of Carrollton, Texas.

In Figure 2, the relative positions of infrared light emitting diodes, and light sensitive phototransistors are shown. A printed circuit board 2010 supports a series of infrared light emitting diodes 2001 and a series of light sensitive phototransistors 2002. The diodes 2001 are thirteen of the diodes in the diode array 500. The phototransistors 2002 are thirteen of the phototransistors in the phototransistor arrays 640, 730, 830, 840, and 846. When a diode 2005 and an associated phototransistor 2006 are selected, there then exists a path 2007, along which infrared light waves travel from the diode 2005 to the phototransistor 2006, if the path 2007 is unobstructed.

If the path between a selected diode in the diode array 500, and its associated phototransistor in the arrays 640, 730, 830, 840, and 846, is unobstructed, the touchscreen circuit produces a logic 1, i.e., a 10 volt potential, on the data wire 1290. If the path is obstructed, the touchscreen circuit produces a logic 0, i.e., a 0 volt potential, on the data wire 1290.

During each control cycle every diode in the diode array 500 is selected once for an associated selection period. During selection period *21 no light emitting diode is selected. During period *21 the touchscreen circuit produces a logic 1 on the data wire 1290.

During each selection period *0 - *35, the touchscreen circuit applies a logic 1 to the synchronization wire 370. During the reset period, the touchscreen circuit applies a logic 0 to the synchronization wire 370, allowing the controlling circuit 55 to synchronize its control cycle.

A logic interface sequence for the controlling circuit 55 is as follows:

```
1.  While the synchronization wire 370 is at logic 1
    send clock pulse to the clock wire 10 (synchronization stage).
2.  Set count = 0.
3.  For count = 0 to 36
        send clock pulse to the clock wire 10
        wait 1.4 millisecond
        check the data wire 1290
        if data wire is at logic 0, store count
    end
4.  Check the synchronization wire 370
5.  If the synchronization wire 370 is at logic 1,
    then error--go to step 1
    else check blocked count numbers for a valid hit.
6.  If valid hit then report to system processor
7.  Go to step 2.
```

The touchscreen circuit differentiates the synchronization periods as follows. In Figure 1A, the clock wire 10 and a power source VDD, set at 10 volts, are inputs to a logic "AND" gate 30, such as a CD4081 manufactured by RCA Corporation of Camden, New Jersey. A resistor 20, with a resistance of, for example, 1.1 kilohms, is placed between the clock wire 10 and the power source VDD. When no voltage potential is applied by the controlling circuit 55, the clock wire 10 is at logic 1. During the clock pulse the clock wire 10 is at logic 0.

An output 31 of the gate 30 is coupled to a counter 260, such as part CD4024 manufactured by RCA Corporation of Camden, New Jersey, so that the counter is incremented on the falling edge of a clock pulse applied by the controlling circuit 55 to the clock wire 10, i.e., when the voltage potential on the clock wire 10 switches from logic 1 to logic 0.

A series of wires 290, labelled PA0, PA1, and PA2, are the low order output of the counter 260. A series of wires 310, labelled PA3, PA4, and PA5, are the high order output of the counter 260. PA0 - PA5 represent digits in a binary number which contains the number of the current selection period. For example, if PA0 is a logic 1, PA1 is a logic 0, PA2 is a logic 1 and PA3, PA4, and PA5 are logic 0s, then the touchscreen is in selection period 000101 (base 2), or in selection period *5 (base 10).

The touchscreen enters the reset period as follows. Wires PA2 and PA5 serve as inputs to a logic "AND" gate 320, such as a CD4081 manufactured by RCA Corporation of Camden, New Jersey. An output 321 of the gate 320 is coupled to a D flip-flop 330, such as a CD4013, manufactured by RCA Corporation of Camden, New Jersey, at a D input 340. A clock input 350 of the D flip-flop 330, is coupled to the output 31 of the gate 30, and serves to clock the input 340 through the D flip-flop 330 to a Q output 360 of the flip-flop 330. The Q output 360 is coupled to a reset input 280 of the counter 260. An NQ output 371 of the flip-flop 330 is coupled to the synchronization wire 370. The NQ output 371 is the inverse of the Q output 360, i.e. when Q is at logic 1, NQ is at logic 0, and when Q is at logic 0, NQ is at logic 1.

While the counter 260 counts from 0 to 35, the output 321 of the gate 320 is at logic 0. Therefore, input 340 of flip-flop 330 is at logic 0, Q output 360 is at logic 0, and NQ Output 371 is at logic 1. When the counter 260 reaches 36 (binary 100100), on the falling edge of the clock pulse received from the controlling circuit 55, address bits PA2 and PA5 are at logic 1. This puts a logic 1 on the output 321 of the gate 320 and on the input 340 of the flip-flop 330. On the rising edge of the clock pulse, i.e., when the potential on the clock wire 10 switches from logic 0 to logic 1, the logic 1 on the input 340 is clocked through the flip-flop 330, causing the Q output 360 to go to logic 1 and the NQ output 371 to go to logic 0. Thus the synchronization wire 370 is at logic 0. The reset 280 of the counter 260 is held at logic 1 throughout the reset period.

On the falling edge of the next clock pulse from the controlling circuit 55, the reset 280 of the counter 260 is still at logic 1. Therefore the counter 260 does not increment the count on PA0 - PA5. This corresponds to selection period *0. Since the counter 260 is reset, PA2 and PA5 are at logic 0 and the input 340 of the D flip-flop 330 is at logic 0. On the rising edge of the clock pulse the logic 0 on the input 340 of the flip-flop 330 is clocked through the flip-flop 330 putting a logic 0 on the Q output 360 and a logic 1 on NQ output 370. Therefore, synchronization wire 370 returns to logic 1, and the counter 260 resumes counting from 1 to 36, on subsequent clock pulses.

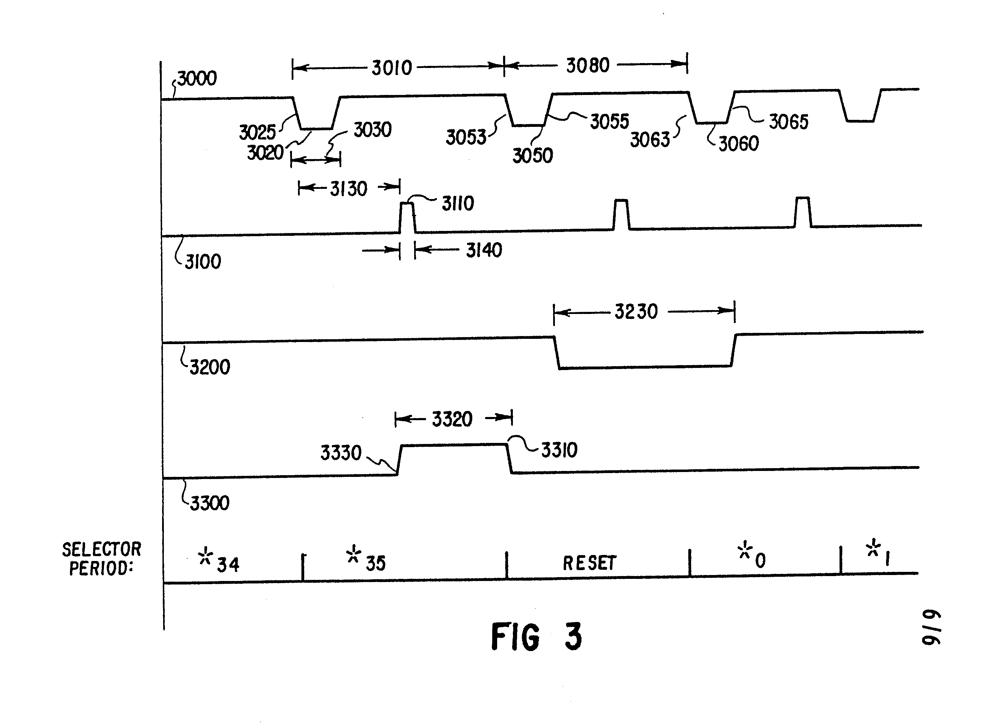

The diagrams in Figure 3 show the relative timing of the above described process. A synchronization signal 3200 corresponds to the voltage potential on the synchronization wire 370. A signal 3000 corresponds to the signal applied by the controlling circuit 55 to the clock wire 10. A reset period 3080 occurs from a falling edge 3053 from a clock pulse 3050, to a falling edge 3063 of a successive clock pulse 3060. On a rising edge 3055 of the clock pulse 3050, the synchronization signal 3200 drops from 10 volts to 0 volts, and remains at 0 volts for a period 3230, until a rising edge 3065 of the clock pulse 3060.

As shown in Figure 1B, selection of a diode from the diode array 500 occurs as follows. Low order outputs 290 are coupled to a 4 to 16 line decoder 410, such as a MM74C42 manufactured by National Semiconductor Company of Santa Clara, California, at a series of low order inputs 420. A series of output wires 440 from the decoder 410 is coupled to an open emitter darlington transistor array 460, such as a UDN2580A manufactured by Sprague of Concord, New Hampshire. The transistor array 460 has 8 transistors, each of which is coupled to the anodes of several of infrared diodes CR1 - CR14, and CR16 - CR36 in the diode array 500.

High order outputs 310 are coupled to a binary coded decimal-to-decimal decoder 620, such as a CD4028 manufactured by RCA Corporation of Camden, New Jersey. A series of output wires 570, are coupled to an open collector darlington transistor array 550, such as a ULN2804A, manufactured by Sprague of Concord, New Hampshire. A series of output wires 510 of the transistor array 550 are coupled to the cathodes of diodes CR1 - CR14, and CR16 - CR36 in the diode array 500 through a series of resistors 511, having a resistance of, for example 15 ohms. The resistors 511 provide current control for the diodes in the diode array 500.

Although each transistor in the transistor array 460 is coupled to more than one anode and each transistor in the transistor array 550 is coupled to more than one cathode in the diode array 500, decoder 410 and decoder 620 decode PA0 - PA5 so that only one diode in the diode array 500 has both its cathode and anode selected at any one time. In this way each of the diodes in diode array 500 is sequentially selected.

For any selection period, the selected diode from the diode array 500 is pulsed as follows. As shown in Figure 1A, the output 31 of the gate 30 is coupled to a oneshot 40, such as a CD4538 manufactured by RCA Corporation of Camden, New Jersey. The oneshot 40 produces a signal 140 on an Q output 210. The signal 140 becomes a logic 1 on the falling edge of the clock pulse on the clock wire 10, and stays at logic 1 for a first period determined by a resistor 110, and a capacitor 100. For example, if the resistor 110 has a resistance of 51.1 kilohms, and the capacitor 100 has a capacitance of 0.1 microfarads, then the first period is approximately 510 microseconds. The oneshot 40 is connected in a retriggerable mode allowing the controlling circuit 55 to skip rapidly through the count while searching for a signal on the synchronization wire 370.

The oneshot 40 is coupled to an input 150 of a oneshot 155, such as a CD4538 manufactured by RCA Corporation of Camden, New Jersey. During the first period, the oneshot 40 applies a logic 0 to the input 150. When the first period ends, the oneshot 40 applies a logic 1 to the input 150. This causes a signal 220 on a Q output 210 of the oneshot 155 to go to logic 1 for a pulse period. The duration of the pulse period is determined by the resistor 230 and the capacitor 240. For instance, if the resistor 230 has a resistance of 5.11 kilohms, and the capacitor 240 has a capacitance of .01 microfarads, then the pulse period is approximatedly 50 microseconds in duration.

An NQ output 180 of the oneshot 155 produces a signal that is the inverse of the Q output 210. The NQ output 180 is coupled to the decoder 410 at an input 430.

The serial coupling of the oneshot 40 and the oneshot 155 results in the generation of an activation pulse, with an approximate duration of 50 microseconds, and which occurs approximately 510 microseconds after the falling edge of the clock pulse received from the controlling circuit 55 on the clock wire 10. One purpose of the activation pulse is to activate a selected diode in the diode array 500. In Figure 1B, low order inputs 420 of the decoder 410 select diodes in the diode array 500, but the diodes are not activated. This is because a high order address input 430 is at logic 1. Outputs PA0 - PA2 have selected a diode in the diode array 500, but the selected diode has not been activated. During the pulse period, the activation pulse causes the input 430 to reset to logic 0. Therefore, the selected diode is activated and produces a beam of infrared light only during the pulse period. When the pulse period ends, the address input 430 returns to logic 1, and the selected diode is no longer activated.

Diagrams in Figure 3, show the relative occurrence of clock pulses and activation pulses during a control cycle. A clock pulse 3020 is asynchronously produced by the controlling circuit 55. The voltage potential on the clock wire 10 prior to clock pulse 3020 is 10 volts. During clock pulse 3020 the voltage potential on clock wire 10 is 0 volts. A period 3030 of clock pulse 3020 has a duration of at least 1.5 microseconds, but not greater than 10 microseconds. A selection period 3010 from a falling edge 3025 of clock pulse 3020 to a subsequent clock pulse 3050 has a duration of at least 1.4 milliseconds.

A signal 3100 corresponds to signal 220 of Figure 1A. An activation pulse 3110 occurs after a first period 3130 with a duration of approximately 510 microseconds. The first period 3130 begins at falling edge 3025. The activation pulse 3110 has a duration 3140 of approximately 50 microseconds.

For each selection period *0 - *35 (but not including selection period *21), a light sensitive phototransistor is also selected from the phototransistor arrays 640, 730, 830, 840, and 846 as follows. Each phototransistor array 640, 730, 830, 840, and 846 has associated with it a 3 by 8 multiplexor 660, 831, 740, 866, or 910 such as a CD4051 manufactured by RCA Corporation of Camden, New Jersey. For example, in Figure 1C, a multiplexor 660 has a series of inputs 670 each individually coupled to an emitter of a phototransistor in the phototransistor array 640. Each emitter is also coupled to ground through a resistor array 650, wherein each resistor in the resistor array 650 has a resistance of, for example, 1 kilohm. Address bits PA0, PA1, and PA2 are used to select one input from the inputs 670 to be coupled to a common wire 665. Address bits PA3, PA4, and PA5 are incorporated in the sequencing of the multiplexor 660 by the coupling of an output wire from the output wires 570 from the decoder 620 through a series of logic inverter gates 580, shown in Figure 1B, to the multiplexor 660 at inhibit 700. When the multiplexor 660 is not selected, a logic 1 is applied to the inhibit 700.

The function of the multiplexors 831, 910, 740 and 866 are similar to the multiplexor 660. The primary difference being that each is coupled at its respective inhibit inputs to a different wire from the output wires 570, and that the phototransistor array 840 has only 7 phototransistors (instead of 8) and the phototransistor array 846 has only 4 phototransistors. By use of inhibit inputs, only one multiplexor from the multiplexors 660, 831, 740, 866, or 910 is selected at any time by address bits PA3, PA4, and PA5.

Each multiplexor is coupled to the common wire 665. Because of the previously discussed addressing scheme, the output of only one phototransistor is coupled to the common wire 665 at any one time.

The above described multiplexing scheme allows each phototransistor in the phototransistor arrays, 640, 730, 830, 840, and 846 to remain "on" continuously. However, for any selection period the emitter of only one phototransistor is coupled by the multiplexors 831, 910, 740, 866, and 660 to common wire 665. The multiplexors thus serve as analog switches to select one transistor to be coupled to the common wire 665.

Ambient light and other signals not generated by infrared light from the selected diode in the array 500 coupled to its associated phototransistor are removed from the signal on the common wire 665 as follows. As shown in Figure 1D, the common wire 665 is coupled to a detector circuit 995. An inductor 940 having an inductance of, for example, 65 millihenries, couples the common wire 665 to ground and serves as a high pass filter. An operational amplifier 950, for example a TL084 manufactured by Texas Instruments of Dallas, Texas, is also coupled to the common wire 665 and serves to act as a buffer. An output 980 of operational amplifier 950 is coupled through a capacitor 990 with a capacitance of, for example, .1 microfarads, and a resistor 1000 with a resistance of, for example, 1.1 kilohms, to another operational amplifier 1040, such as a TL084. A resistor 1010 of resistance, for example 100K, is coupled to the resistor 1000 and to the operational amplifier 1040. The capacitor 990, resistor 1000, operational amplifier 1040, and resistor 1010 act as a high pass filter with a pole at 1.5 kilohertz and also provide a gain of 90. The signal is inverted as it passes through the operational amplifier 1040. An output 1050 of the operational amplifier 1040 is coupled through a resistor 1060 having a resistance of, for example, 5.11 kilohms, to an operational amplifier 1120, such as a TL084 at an input 1080. The input 1080 is also coupled to ground through a capacitor 1070 having a capacitance of, for example, .01 microfarads. The capacitor 1070 and resistor 1060 act as a low pass

filter with a zero at 3.3 kilohertz.

An input 1090 of the operational amplifier 1120 is coupled to ground through a resistor 1100, having a resistance of, for example, 1.1 kilohms. The input 1090 is also coupled to a -12 volt power source through the resistor 1110, having a resistance of, for example 1.1 kilohms. The input 1090 is therefore at approximately -1.2 volts. The operational amplifier 1120 acts as a comparator for squaring and inverting the signal at the output 1150. The input 1090 is set at -1.2 volts to eliminate fluctuations in the signal on the input 1080 with a magnitude below 1.2 volts.

The output 1150 of the operational amplifier 1120 is coupled through a diode 1160, to a gate input 1200 of a logic "AND" gate 1210, for example a CD4081 manufactured by RCA Corporation of Camden, New Jersey. The diode 1160 removes the negative values of the signal at output 1150 in order to make the signal compatible with the logic gate 1210. The input 1200 is coupled to ground through a resistor 1170, having resistance of, for example, 10K.

The gate 1210 performs a logic "AND" between the signal received from the diode 1160, and the signal 220 from the oneshot 155. As discussed earlier, the signal 220 is at logic 0 except for the pulse period of approximately 50 microseconds, which occurs approximately 510 microseconds from the trailing edge of the clock pulse received by clock wire 10. The output of the detector 995 at the gate input 1200 is only coupled through the gate 1210 during the pulse period, thereby effectively removing any "noise" signals not generated during the pulse period. An output 1220 of the gate 1210 is coupled to a set input 1270 of a D flip-flop 1230, for example, a CD4013 manufactured by RCA Corporation of Camden, New Jersey.

Each selection period thus proceeds as follows. The flip-flop 1230 is reset every clock cycle by the signal 140 of the oneshot 40. This resets the data wire 1290, which is an output of the flip-flop 1230. The wires labelled PA0 - PA5 select a diode from the diode array 500. PA0 - PA5 also select a corresponding phototransistor from the phototransistor array 640, 830, 840, 730, or 846. Oneshots 40 and 155 then generate the 50 microsecond activation pulse approximately 510 microseconds after the falling edge of the clock pulse sent by the controlling circuit 55 on the clock wire 10. The selected diode from the diode array 500 is activated only for the pulse period.

If the optical path between the selected diode in the array 500 and its associated phototransistor Q1 - Q35 is unobstructed, infrared light is received by the associated phototransistor. This phototransistor Q1 - Q35 generates a signal which is applied to the common wire 665. The signal on the common wire 665 is processed by the detector circuit 995, which serves to filter, amplify, square, and remove its negative component. The resulting signal passes through the "AND" gate 1210 during the pulse period, and sets the flip-flop 1230. The data wire 1290 is thereby set to a logic 1, and the controlling circuit 55 is informed that the optical path is unobstructed.

If there is an obstruction between the selected diode in the array 500 and its corresponding phototransistor Q1 - Q35, no light is detected by the corresponding phototransistor Q1 - Q35. Therefore, no corresponding signal is coupled onto the common wire 665, and no signal appears at the input 1200 of gate 1210. Therefore, the flip-flop 1230 is not set and the data wire 1290 remains at logic 0. The controlling circuit 55 is thus informed that the optical path is obstructed.

In Figure 3, a data signal 3300 corresponds to the signal on the data wire 1290. If in selection period *35 there is no obstruction between the selected diode CR1 - CR14 and CR16 - 38 and its associated transistor Q1 - Q35, the data signal 3300 will switch from 0 volts to 10 volts at time 3330 corresponding to the rising edge of activation pulse 3110. The signal 3300 stays at 10 volts for a period 3320 until a time 3310 corresponding to falling edge 3053 of succeeding clock pulse 3050. If there had been an obstruction between the selected dioded CR1 - CR14 and CR16 - CR38 and its associated phototransistor Q1 - Q35, then the data signal 3300 would have remained at 0 volts during time period 3320.

As mentioned before there is no infrared diode for the address 21. The circuit nevertheless sets the data wire 1290 to logic 1 during this selection period. This is done by a logic "AND" gate 1300, for example, a CD4081 manufactured by RCA Corporation of Camden, New Jersey, shown in Figure 1B. The gate 1300 couples a wire from the output wires 440 with a wire from the output wires 570, corresponding to address *21. An output 1310 of the gate 1300 is therefore at logic 1 during address *21 and a logic 1 is applied to a clock input 1240 of the flip-flop 1230. The clock input 1240 clocks through a logic 1 placed on a D input 1250, to the data wire 1290 during address *21.

CLAIMS

1. A circuit for interfacing between a touchscreen device and a controlling device (55), the circuit being characterized by:

clocking means (10) coupled to the touchscreen device and the controlling device for sending a clock pulse to the touchscreen device;

synchronization means (370) coupled to the touchscreen device and the controlling device for synchronizing the touchscreen device with the controlling device; and

data means coupled to the touchscreen device and the controlling device for transferring data therebetween.

2. A circuit according to claim 1 characterized in that the touchscreen device employs a plurality of photo emitters (2001) and a plurality of photo detectors (2002) arranged in a matrix array so that each photo emitter has an associated photo detector and an output of each photo detector varies when an object is placed between each photo detector and its associated photo emitter.

3. A circuit according to claim 2 characterized in that for each clock pulse sent to the touchscreen device a datum is transferred indicating whether there is an obstruction placed between a first of the plurality of photo emitters (2001) and a first associated photo detector (2002) and in that successive clock pulses result in data transferred which describes whether an obstruction is placed between subsequent photo emitters and subsequent associated photo detectors.

4. A circuit according to any one of the preceding claims characterized in that the clocking means is asynchronous.

0135391

5. A circuit according to claim 3 or claim 4 as appended to claim 3 characterized in that for every clock pulse the datum is held by the data means until a subsequent clock pulse is generated.

6. Apparatus for generating photo beams in a sensor matrix device, the apparatus being characterized by:

a plurality of photo emitters (2001);

selection means (55) coupled to the photo emitters for selecting one of the plurality of photo emitters for a selection period; and

pulse means (40,155) coupled to the selecting means for activating the one of the plurality of photo emitters for an activating period.

7. Apparatus according to claim 6 characterized in that the activating period occurs during the selection period and the duration of the activating period is shorter than the duration of the selection period.

8. Apparatus according to either one of claims 6 and 7 characterized in that the photo beams are infrared light beams and the photo emitters (2001) emit infrared light.

9. An apparatus for detecting one of a plurality of photo beams and comprising:

a plurality of photo detectors (2002), the apparatus being characterized by

selection means (55) coupled to the photo detectors for selecting an output of one of the photo detectors;

removing means (665) coupled to the selecting means for removing signals not generated by the photo beams.

10. An apparatus according to claim 9 characterized in that the photo detectors comprise phototransistors (2002).

11. An apparatus according to either one of claims 9 and 10 characterized in that the selection means comprises a plurality of analog switches.

12. An apparatus according to any one of claims 9 to 11 characterized in that the removing means comprises a high pass filter.

13. Apparatus according to any one of claims 9 to 12 further characterized by conversion means coupled to the removing means for converting signals from the removing means into digital signals.

14. An apparatus according to any one of claims 9 to 13 characterized in that the photo detectors are active even when not selected by the selection means.

FIG IA

VDD
51.1K
R4
110
100
.01
C3
4538
U5
40
OS1
140
VDD
230
.01
240
C4
IREDEN
220
210
155
180
NIREDEN
150
TP1
RD20
10K
TO FIG 1B
20
1.1K
R7
TSCLOCK
J1-9
10
55
4081
30
31
NCLKB
CD4024
260
280
RST
CLK
PA0
PA1
PA2
PA3
PA4
PA3
NC
PA0-4051'S
PA1-4051'S
PA2-4051'S
310
NCLK
350
U13
330
4013
360
TSSYNCN
370
371
TP8
PA2
4018
PA5
321
320
340
RESET
FROM FIG 1C

C42
410
U3
PA0
PA1
PA2
420
430
440
UDN2580A
460
U4
8 EACH
VDD
IN
OUT
SUB
ANODE0
ANODE1
ANODE2
ANODE3
ANODE4
ANODE5
ANODE6
ANODE7
500
NA5
FROM FIG IA
620
U15
4028
PA3
PA4
PA5
1.1K
R16
570
550
ULN2804A
U1
COMM
GND
VDD (SUB)
CATH0
CATH1
CATH2
CATH4
510
511
15/25W
580
MC14069
TSSYNCH
370
55
A20
A5
4081
1300
1310
A25
FIG IB
TO FIG ID

TO FIG 1A
TO FIG 1D
830
Q13
Q12
Q11
Q10
Q9
Q8
Q7
Q6
8x1.0K
U7
VDD 4051
PA0
PA1
PA2
A VDD
B
C
INH
COM
VEE VSS
831
-12
RN2
RN3
640
+12
Q21
Q20
Q19
Q18
Q17
Q16
Q15
Q14
8x1.0K
U6 VDD
4045
NROW1
Tp4
700
660
670
650
RN1
665
TP3
PTOUT
730
Q24
Q25
Q26
Q27
Q28
Q29
Q30
Q31
U9
VDD
8x2.2K
4051
COMM
740
RN4
RN5
846
Q32
Q33
Q34
Q35
4x2.2K
U10
866
FIG 1C

FROM FIG 1B
FROM FIG 1C
840
+12
Q5
Q4
Q3
Q2
Q1
Q22
Q23
5x1.0K
2x2.2K
RN3
RN4
U8
VDD
4051
PA0
PA1
PA2
A
B
C
INH
910
COM
VEE
VSS
C31
-12
1230
TSDATA
U13
A25
1240
CLK
4013
Q
NQ
D
R
S
13
1290
J1-2
12
NC
1250
10
8
1270
55
2
980
3
U12
950
990
R23
100K
1010
R13
.1
1.1K
1000
TL084
L1
65mH
940
6
5
1040
1050
7
4.7K
1060
1070
.01
1080
9
10
1150
1160
1120
1090
10K
1.1K
1110
-12
1100
TP6
PT
IREDEN
220
4018
1220
1210
1200
995
OS1
140

FIG 1D

| FIG 1A | FIG 1B |
|---|---|
| FIG 1C | FIG 1D |

FIG 1E

2010
2001
2005
2007
2006
2001
2002

FIG 2

3000
3010
3020
3025
3030
3050
3053
3055
3060
3063
3065
3080
3100
3110
3130
3140
3200
3230
3300
3310
3320
3330
SELECTOR PERIOD:
*34
*35
RESET
*0
*1

FIG 3